(19) Europäisches Patentamt
European Patent Office
Office européen des brevets

(11) **EP 3 350 056 B1**

(12) **EUROPÄISCHE PATENTSCHRIFT**

(45) Veröffentlichungstag und Bekanntmachung des Hinweises auf die Patenterteilung:
**06.11.2019 Patentblatt 2019/45**

(21) Anmeldenummer: **16756706.4**

(22) Anmeldetag: **24.08.2016**

(51) Int Cl.:
**B61L 25/02** (2006.01)   **B61L 1/16** (2006.01)

(86) Internationale Anmeldenummer:
**PCT/EP2016/070015**

(87) Internationale Veröffentlichungsnummer:
**WO 2017/045888 (23.03.2017 Gazette 2017/12)**

(54) **VERFAHREN ZUR GESCHWINDIGKEITSERMITTLUNG EINES SCHIENENGEBUNDENEN FAHRZEUGS**

METHOD FOR DETERMINING THE SPEED OF A RAIL-BOUND VEHICLE

PROCÉDÉ DE DÉTERMINATION DE LA VITESSE D'UN VÉHICULE ROULANT SUR RAILS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.09.2015 DE 102015217535**

(43) Veröffentlichungstag der Anmeldung:
**25.07.2018 Patentblatt 2018/30**

(73) Patentinhaber: **Thales Management & Services Deutschland GmbH**
**71254 Ditzingen (DE)**

(72) Erfinder: **OLDEWURTEL, Kassen**
**71706 Markgröningen (DE)**

(74) Vertreter: **Kohler Schmid Möbus Patentanwälte Partnerschaftsgesellschaft mbB**
**Gropiusplatz 10**
**70563 Stuttgart (DE)**

(56) Entgegenhaltungen:
WO-A1-99/11497   DE-A1-102004 012 170
DE-A1-102011 005 699   US-A- 5 395 078
US-A1- 2007 001 059

- **MARTIN ROSENBERGER UND CHRISTIAN PUCHER: "Raddetektion mit Geschwindigkeitsausgabe bietet echten Mehrwert", SIGNAL + DRAHT, DVV, Bd. 105, Nr. 5, 1. Mai 2013 (2013-05-01), Seiten 12-16, XP001581371, ISSN: 0037-4997**
- **GERHARD GRUNDNIG ET AL: "Anwendungsmoeglichkeiten von Raddetektionssystemen mit induktiven Radsensoren", SIGNAL + DRAHT, DVV, Bd. 106, Nr. 6, 1. Juni 2014 (2014-06-01), Seiten 24-28, XP001589475, ISSN: 0037-4997**

**Beschreibung**

Hintergrund der Erfindung

Die Erfindung betrifft ein Verfahren zur Geschwindigkeitsermittlung eines schienengebundenen Fahrzeugs mit folgenden Verfahrensschritten:

- Detektion eines Referenzelements eines Fahrzeugs mittels einer ersten Detektionseinrichtung, wobei von der ersten Detektionseinrichtungen ein erstes Detektionssignal erzeugt wird, wenn das Referenzelement die erste Detektionseinrichtung passiert;
- Detektion des Referenzelements mittels einer von der ersten Detektionseirichtung in Fahrtrichtung beabstandeten zweiten Detektionseinrichtung, wobei von der zweiten Detektionseinrichtungen ein zweites Detektionssignal erzeugt wird, wenn das Referenzelement die zweite Detektionseinrichtung passiert;
- Umwandlung der Detektionssignale in digitale Detektionspulse;
- Ermittlung der Zeitdifferenz zwischen den beiden Detektionspulsen.

Ein derartiges Verfahren wird beispielsweise bei der Stellwerksabhängige Geschwindigkeitsüberwachung AlTrac 6420 SSU (speed supervision unit) der Thales Rail Signalling Solutions GmbH verwendet.

Bei dem bekannten Verfahren zur Geschwindigkeitsermittlung werden Paare von Detektionseinrichtungen entlang des Gleises montiert. Wenn ein Schienenfahrzeug eine Detektionseinrichtung passiert, wird in der Detektionseinrichtung ein Signal induziert, welches zu einem digitalen Puls umgewandelt wird. Aus dem zeitl. Abstand zwischen den Flankenanstiegen der beiden Pulssignale des Detektionseinrichtungs-Paares und dem bekannten Abstand der beiden Detektionseinrichtungen kann die Geschwindigkeit des passierenden Fahrzeugs ermittelt werden. Um eine ausreichende Genauigkeit der Geschwindigkeitsmessung zu garantieren, müssen die Detektionseinrichtungen in einem Abstand von mindestens 2000 mm montiert werden. Für die Geschwindigkeitsermittlung müssen daher Detektionseinrichtungen in einem geeigneten Abstand montiert werden.

Die US-Patentschrift 5,395,078 offenbart einen selbst-kalibrierenden Achsdetektor zur Geschwindigkeitsermittlung.

Aufgabe der Erfindung

Es ist Aufgabe der Erfindung, ein Verfahren zur Geschwindigkeitsmessung eines schienengebundenen Fahrzeugs vorzuschlagen, welches eine Geschwindigkeitsmessung mit höherer Genauigkeit ermöglicht, insbesondere mit minimalem Montageaufwand.

Beschreibung der Erfindung

Diese Aufgabe wird erfindungsgemäß gelöst durch ein Verfahren gemäß Patentanspruch 1.

Gemäß der vorliegenden Erfindung wird durch Verknüpfung des ersten und des zweiten digitalen Detektionspulses mittels einer XOR-Verknüpfung in einem XOR-Gatter ein XOR-Signal erzeugt und die Dauer des XOR-Signals ermittelt. Die Zeitdifferenz zwischen den beiden Detektionspulsen wird durch Halbierung der Dauer des XOR-Signals ermittelt.

Im Gegensatz zum Stand der Technik wird zur Ermittlung der Zeitdifferenz nicht der Abstand der Flankenanstiege der Detektionspulse ermittelt, sondern der Abstand der Mitten der Detektionspulse. Mit dem erfindungsgemäßen Verfahren ist es daher möglich eine genaue Geschwindigkeitsbestimmung auch dann vorzunehmen, wenn die beiden Detektionspulse unterschiedlich lang sind, z.B. aufgrund von z. B. Toleranzen oder unterschiedlichem Abgleich der beiden Detektionseinheiten, da Schwankungen in der Pulslänge i.A. immer um den Pulsmittelpunkt auftreten.

Durch Anwendung der XOR-Operation kann trotz überlappender Detektionspulse die Mitte der Detektionspulse ermittelt werden, ohne dass jeder Detektionspulse ausgegeben und die Lage der Detektionspulse zueinander ausgewertet wird. Das erfindungsgemäße Verfahren ermöglicht daher auch, die Geschwindigkeit eines schienengebundenen Fahrzeugs mit hoher Genauigkeit zu bestimmen, wenn die Detektionseinrichtungen nahe beieinander angeordnet sind und die Gefahr besteht, dass sich die Detektionspulse überlappen.

Bevorzugte Varianten des erfindungsgemäßen Verfahrens

Vorzugsweise erzeugt ein Zähler einer Binärzähler-Einrichtung Zählsignale mit einer vorgegebenen Taktfrequenz, solange die XOR-Verknüpfung "true" ausgibt. Aus der Anzahl der Zählsignale wird dann die Dauer des XOR-Signals ermittelt. Die Detektion der Zählsignale erfolgt also durch Hochzählen eines Zählers der Binärzähler-Einrichtung durch ein anliegendes Signal (XOR-Signal) am Takteingang. Bei Kenntnis der Taktfrequenz und der Anzahl N der detektierten Zählsignale kann die Dauer des XOR-Signals ermittelt werden (N * 1/f)

Vorzugsweise wird der Zähler der Binärzähler-Einrichtung gestartet, sobald die XOR-Verknüpfung "true" ausgibt. Das Auslesen des Zählers erfolgt vorzugsweise nach Beendigung des zweiten Detektionspulses.

Eine besonders bevorzugte Variante sieht vor, dass die Binärzähleinrichtung Teil eines Zählpunktes, insbesondere eines Achszählpunktes ist.

Darüber hinaus ist es vorteilhaft, wenn als Detektionseinrichtungen Sensoren eines Achszählpunktes verwendet werden. Als Referenzelement am Fahrzeug dient dann eine Achse des Fahrzeugs. Somit ist es möglich, eine genauere Geschwindigkeitsermittlung unter Verwendung von bereits an der Strecke vorhandener Infrastruktur (insbesondere Achszählpunkte), also ohne zusätzlichen Montageaufwand, durchzuführen.

Da das erfindungsgemäße Verfahren mittels einer XOR-Operation die Mitte der Pulse auch bei überlappenden Pulsen ermitteln und somit die Geschwindigkeit des Fahrzeugs mit hoher Genauigkeit bestimmen kann, sieht eine besonders bevorzugte Variante des erfindungsgemäßen Verfahrens vor, dass der Abstand zwischen der ersten und der zweiten Detektionseinrichtung so klein gewählt wird, dass die Detektionspulse zeitlich überlappen.

Besonders bevorzugt ist es, den Abstand der beiden Detektionseinrichtungen ≦ 148mm, vorzugsweise ≦ 140mm zu wählen. Dies entspricht in etwa dem Abstand der Detektionseinrichtungen bei einem konventionellen Achszählpunkt.

Vorzugsweise werden für verschiedene Referenzpunkte desselben Fahrzeugs erste und zweite digitale Detektionspulses erzeugt. Zur Ermittlung der durchschnittlichen Geschwindigkeit des Fahrzeugs werden dann die Dauer der XOR-Signale für alle Referenzpunkte aufsummiert, und die Zeitdifferenz zwischen den beiden digitalen Detektionspulsen wird durch Halbierung der Dauer des Mittelwerts der XOR-Signale ermittelt wird.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Detaillierte Beschreibung der Erfindung und Zeichnung

Fig. 1     zeigt ein Diagramm der einzelnen Verfahrensschritte.

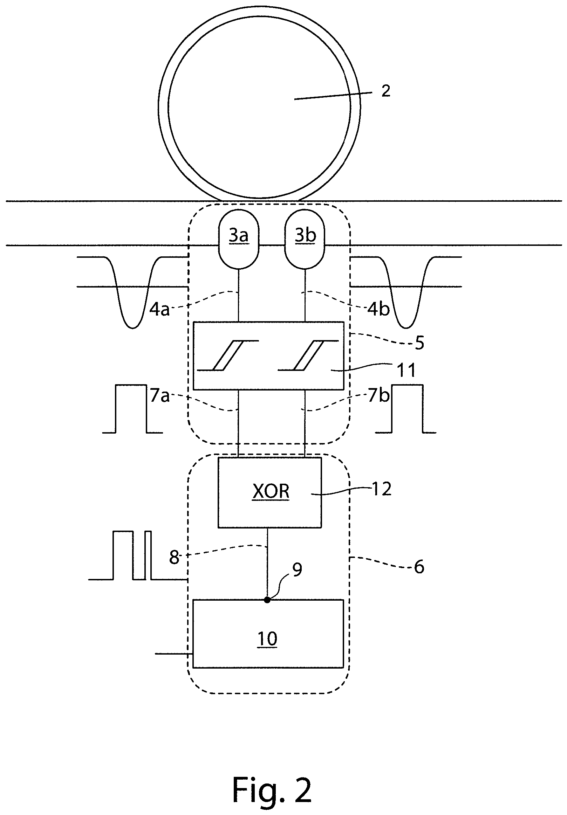

Fig. 2     zeigt einen Aufbau einer für das erfindungsgemäße Verfahren geeigneten Anordnung.

Fig. 3a     zeigt ein analoges erstes Detektionssignal.

Fig. 3b     zeigt ein analoges zweites Detektionssignal.

Fig. 3c     zeigt einen digitalen ersten Detektionspuls.

Fig. 3d     zeigt einen digitalen zweiten Detektionspuls.

Fig. 3e     zeigt ein von der Detektionseinrichtung ausgegebenes XOR-Signal des ersten und zweiten Detektionspulses aus Fig. 2c und 2d.

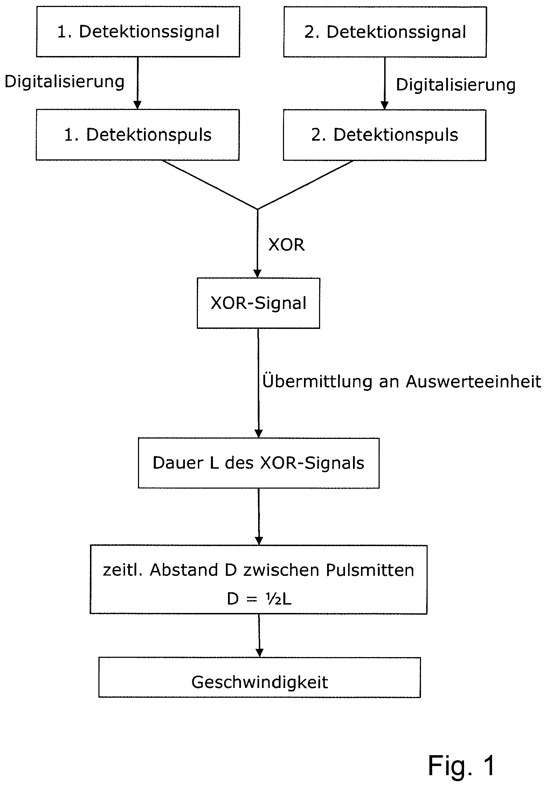

Die in **Fig. 1** aufgeführten Verfahrensschritte des erfindungsgemäßen Verfahrens werden im Folgenden beschrieben:

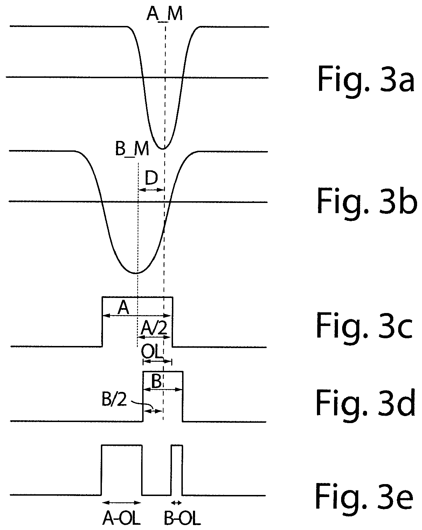

Zunächst wird ein an einem schienengebundenen Fahrzeug **1** angebrachtes Referenzelement **2** an zwei voneinander beabstandeten Detektionseinrichtungen **3a, 3b** detektiert, indem in den Detektionseinrichtungen **3a, 3b** beim Passieren des Referenzelements jeweils ein analoges Detektionssignal **4a, 4b** z.B. durch Induktion oder optisch detektiert wird. Als Referenzelement 2 kann beispielsweise eine Achse oder ein RFID-Tag dienen. Die Detektionseinrichtungen 3a, 3b sind dann entsprechend als Sensoren eines Achszählpunktes oder als RFID-Lesegeräte ausgeführt. Im gezeigten Beispiel werden als Detektionseinrichtung 3a, 3b Sensoren eines Zählpunktes **5** genutzt, der mit einer Auswerteeinheit **6** verbunden ist. Bei diesem Zählpunkt 5 kann es sich um einen Achszählpunkt eines Achszählers handeln oder aber auch um einen Zählpunkt, der Transpondersignale detektiert und zählt (je nach verwendetem Referenzelement 2). Die von den Sensoren 3a, 3b detektierten analogen Detektionssignale 4a, 4b werden von einer Zähleinheit 11 des Zählpunkts 5 in digitale Detektionspulse **7a, 7b** umgewandelt, wie in den Fig. 3c, 3d gezeigt.

Bei dem gezeigten Beispiel weisen die analogen Detektionssignale 4a, 4b jeweils eine Absenkkurve mit unterschiedlich steilen Flanken auf, was beispielsweise durch einen unterschiedlichen Abgleich der Detektionseinrichtungen 3a, 3b, durch unterschiedliche Toleranzen in den Bauelementen oder unterschiedlichen Abgleich der beiden Detektionseinrichtungen 3a, 3b bedingt sein kann. Dementsprechend sind die digitalen Detektionspulse 7a, 7b unterschiedlich breit (Pulsbreite des ersten Detektionspulses 7a: **A**, Pulsbreite des zweiten Detektionspulses 7b: **B**). Darüber hinaus wurde bei dem gezeigten Beispiel Detektionseinrichtungen 3a, 3b verwendet, deren Abstand **d** zueinander relativ gering ist, so dass sich die beiden Detektionssignale 4a, 4b bzw. Detektionspulse 7a, 7b zeitlich überlappen, und zwar um eine Überlappungsbreite **OL**.

Die Auswerteeinheit 6 umfasst ein XOR-Gatter **12** und eine BinärZähleinrichtung **10**. Durch eine XOR-Operation wird im XOR-Gatter 12 ein XOR-Signal **8** erzeugt, das diejenigen Zeiträume angibt, in denen da Referenzelement 2 jeweils nur von einer der beiden Detektionseinrichtungen 3a, 3b detektiert wird. Aus der Dauer (Gesamtbreite) **L** des XOR-Signals 8 wird dann die Zeitdifferenz (zeitl. Abstand) **D** der Mittelpunkte der Detektionssignale 4a, 4b bzw. der Detektionspulse 7a, 7b (Mittelpunkt der Detektionssignale 4a, 4b = Mittelpunkt der Detektionspulse 7a, 7b) ermittelt.

Die Gesamtbreite L des XOR-Signals 8 berechnet sich aus der Summe der Pulsbreite A des ersten Detektionspulses 7a und der Pulsbreite B des zweiten Detektionspulses 7b abzüglich der Überlappungsbreite OL:

$$L = A + B - 2OL$$

Die gesuchte Zeitdifferenz **D** der Mittelpunkte der Detektionssignale 4a, 4b bzw. der Detektionspulse 7a, 7b berechnet sich zu:

$$D = \tfrac{1}{2}\,A - OL + \tfrac{1}{2}\,B$$

bzw.

$$2D = A - 2OL + B$$

Es ergibt sich also:

$$D = \tfrac{1}{2}\,L$$

bzw.

$$v = d/D = 2d/L$$

mit d = Abstand der Detektionseinrichtungen und v= zu ermittelnde Geschwindigkeit (gleichförmige Geschwindigkeit vorausgesetzt).

Die Zeitdifferenz D der Mittelpunkte der Detektionssignale 4a, 4b bzw. der Detektionspulse 7a, 7b ist also gleich dem halben Summenbreite L des XOR-Signals 8. Die zu ermittelnde Geschwindigkeit v beträgt demnach 2d/L,.

Die digitalen Detektionspulse 7a, 7b werden an die Auswerteeinrichtung 6 übergeben, wo mittels des XOR-Gatters 12 die XOR-Operation in stattfindet. Das XOR-Signal 8 wird an einen Takteingang **9** der Binärzähler-Einrichtung 10 der Auswerteeinheit 6 angelegt und Zählsignale werden mit einer vorgegebenen Taktfrequenz (vorzugsweise 100kHz - 1 MHz) erzeugt, wenn das XOR-Signal 8 am Takteingang 9 anliegt (Ausgabe von "high" des XOR-Gatters), sobald also das Referenzelement 2 lediglich von einer der beiden Detektionseinrichtungen 3a, 3b erfasst wird. Die Anzahl der Zählsignale ist ein Maß für die Summenbreite L des XOR-Signals 8. Detektion der analogen Signale, Digitalisierung der Detektionssignale, XOR-Operation und Erzeugung der Zählsignale werden gleichzeitig durchgeführt. Es muss also nicht abgewartet werden, bis ein Referenzelement 2 von beiden Detektionseinrichtungen 3a, 3b detektiert wurde und die Detektionssignale 4a, 4b vollständig vorliegen, bevor mit der weiteren Datenverarbeitung begonnen wird. Das Auslesen der Zählsignale der Binärzähler-Einrichtung 10 kann bspw. immer nach zwei XOR-Pulsen erfolgen.

Bezugszeichenliste

| | |
|---|---|
| 2 | Referenzelement |
| 3a, 3b | Detektionseinrichtungen |
| 4a, 4b | Detektionssignale |
| 5 | Zählpunkt |
| 6 | Auswerteeinheit |
| 7a, 7b | Detektionspulse |
| 8 | XOR-Signal |
| 9 | Takteingang |
| 10 | Binärzähl-Einrichtung der Auswerteeinheit |
| 11 | Zähleinheit des Zählpunkts |
| 12 | XOR-Gatter |

**Patentansprüche**

1. Verfahren zur Geschwindigkeitsermittlung eines schienengebundenen Fahrzeugs mit folgenden Verfahrensschritten:

   • Detektion eines Referenzelements (2) des Fahrzeugs mittels einer ersten Detektionseinrichtung (3a), wobei von der ersten Detektionseinrichtungen (3a) ein erstes Detektionssignal (4a) erzeugt wird, wenn das Referenzelement (2) die erste Detektionseinrichtung (3a) passiert;
   • Detektion des Referenzelements (2) mittels einer von der ersten Detektionseinrichtung (3a) in Fahrtrichtung beabstandeten zweiten Detektionseinrichtung (3b), wobei von der zweiten Detektionseinrichtungen (3b) ein zweites Detektionssignal (4b) erzeugt wird, wenn das Referenzelement (2) die zweite Detektionseinrichtung (3b) passiert;
   • Umwandlung der Detektionssignale (4a, 4b) in digitale Detektionspulse (7a, 7b);
   • Ermittlung der Zeitdifferenz zwischen den beiden Detektionspulsen (7a, 7b);

   **dadurch gekennzeichnet,**
   **dass** durch Verknüpfung des ersten und des zweiten digitalen Detektionspulses (7a, 7b) mittels einer XOR-Verknüpfung in einem XOR-Gatter (12) ein XOR-Signal (8) erzeugt wird,
   **dass** die Dauer des XOR-Signals (8) ermittelt wird, und
   **dass** die Zeitdifferenz zwischen den beiden Detektionspulsen (7a, 7b) durch Halbierung der Dauer des XOR-Signals (8) ermittelt wird.

2. Verfahren nach Anspruch 1, **dadurch gekennzeichnet,**
   **dass** ein Zähler einer Binärzähler-Einrichtung (10) Zählsignale mit einer vorgegebenen Taktfrequenz erzeugt, solange die XOR-Verknüpfung "true" ausgibt, und
   **dass** aus der Anzahl der Zählsignale die Dauer des XOR-Signals (8) ermittelt wird.

**3.** Verfahren nach Anspruch 2, **dadurch gekennzeichnet, dass** der Zähler der Binärzähler-Einrichtung (10) gestartet wird, sobald die XOR-Verknüpfung "true" ausgibt.

**4.** Verfahren nach Anspruch 2 oder 3, **dadurch gekennzeichnet, dass** die Binärzähleinrichtung (10) Teil eines Zählpunktes (5), insbesondere eines Achszählpunktes ist.

**5.** Verfahren nach einem der vorhergehenden Ansprüche, **dadurch gekennzeichnet, dass** als Detektionseinrichtungen (3a, 3b) Sensoren eines Achszählpunktes verwendet werden.

**6.** Verfahren nach einem der vorhergehenden Ansprüche, **dadurch gekennzeichnet, dass** der Abstand zwischen der ersten und der zweiten Detektionseinrichtung (3a, 3b) so klein gewählt wird, dass die Detektionspulse (7a, 7b) zeitlich überlappen.

**7.** Verfahren nach einem der vorhergehenden Ansprüche, **dadurch gekennzeichnet, dass** der Abstand der beiden Detektionseinrichtungen (3a, 3b) $\leqq$ 148mm, vorzugsweise $\leqq$ 140mm beträgt.

**8.** Verfahren nach einem der vorhergehenden Ansprüche, **dadurch gekennzeichnet, dass** für verschiedene Referenzpunkte (2) desselben Fahrzeugs erste und zweite digitale Detektionspulses (7a, 7b) erzeugt werden, und **dass** zur Ermittlung der durchschnittlichen Geschwindigkeit des Fahrzeugs die Dauer der XOR-Signale (8) für alle Referenzpunkte (2) aufsummiert werden, und dass die Zeitdifferenz zwischen den beiden digitalen Detektionspulsen (7a, 7b) durch Halbierung der Dauer des Mittelwerts der XOR-Signale (8) ermittelt wird.

**9.** Verwendung eines Achszählpunktes zur Geschwindigkeitsermittlung eines schienengebundenen Fahrzeugs mittels eines Verfahrens nach einem der vorhergehenden Ansprüche.

**Claims**

**1.** Method for determining the speed of a rail-bound vehicle, comprising the following method steps:

• detecting a reference element (2) of the vehicle by means of a first detection device (3a), the first detection device (3a) generating a first detection signal (4a) when the reference element (2) passes the first detection device (3a);
• detecting the reference element (2) by means of a second detection device (3b) spaced from the first detection device (3a) in the direction of travel, the second detection devices (3b) generating a second detection signal (4b) when the reference element (2) passes the second detection device (3b);
• converting the detection signals (4a, 4b) into digital detection pulses (7a, 7b);
• determining the time difference between the two detection pulses (7a, 7b); **characterized in that** by linking the first and the second digital detection pulse (7a, 7b) by means of an XOR logic operation, an XOR signal (8) is generated in an XOR gate (12), **in that** the duration of the XOR signal (8) is determined, and **in that** the time difference between the two detection pulses (7a, 7b) is determined by halving the duration of the XOR signal (8).

**2.** Method according to claim 1, **characterized in that** a counter of a binary counter device (10) generates count signals having a predetermined clock frequency as long as the XOR logic operation outputs "true", and **in that** the duration of the XOR signal (8) is determined from the number of count signals.

**3.** Method according to claim 2, **characterized in that** the counter of the binary counter device (10) is started as soon as the XOR logic operation outputs true.

**4.** Method according to either claim 2 or claim 3, **characterized in that** the binary counter device (10) is part of a counting point (5), in particular of an axle counting point.

**5.** Method according to any of the preceding claims, **characterized in that** sensors of an axle counting point are used as detection devices (3a, 3b).

**6.** Method according to any of the preceding claims, **characterized in that** the distance between the first and the second detection devices (3a, 3b) is selected to be sufficiently small that the detection pulses (7a, 7b) overlap in time.

**7.** Method according to any of the preceding claims, **characterized in that** the distance between the two detection devices (3a, 3b) is $\leqq$ 148 mm, preferably $\leqq$ 140 mm.

**8.** Method according to any of the preceding claims, **characterized in that** first and second digital detection pulses (7a, 7b) are generated for different reference points (2) of the same vehicle, and **in that**, in order to determine the average speed of the vehicle, the duration of the XOR signals (8) for all reference points (2) is summed up, and **in that** the time difference between the two digital detection pulses (7a, 7b) is determined by halving the duration of the mean value of the XOR signals (8).

**9.** Use of an axle counting point for determining the speed of a rail-bound vehicle by means of a method according to any of the preceding claims.

## Revendications

**1.** Procédé pour déterminer la vitesse d'un véhicule roulant sur rails, comprenant les étapes de procédé suivantes :

- détection d'un élément de référence (2) du véhicule au moyen d'un premier dispositif de détection (3a), un premier signal de détection (4a) étant généré par le premier dispositif de détection (3a) lorsque l'élément de référence (2) passe le premier dispositif de détection (3a) ;
- détection de l'élément de référence (2) au moyen d'un deuxième dispositif de détection (3b) espacé du premier dispositif de détection (3a) dans la direction de déplacement, un deuxième signal de détection (4b) étant généré par le deuxième dispositif de détection (3b) lorsque l'élément de référence (2) passe le deuxième dispositif de détection (3b) ;
- conversion des signaux de détection (4a, 4b) en impulsions de détection numériques (7a, 7b) ;
- détermination de la différence de temps entre les deux impulsions de détection (7a, 7b) ;

**caractérisé en ce**
**qu'**un signal XOR (8) est généré en combinant les première et deuxième impulsions de détection numériques (7a, 7b) au moyen d'une combinaison XOR dans une porte XOR (12),
**que** la durée du signal XOR (8) est déterminée et
**que** la différence de temps entre les deux impulsions de détection (7a, 7b) est déterminée en divisant par deux la durée du signal XOR (8).

**2.** Procédé selon la revendication 1, **caractérisé en ce qu'**un compteur d'un dispositif de comptage binaire (10) génère des signaux de comptage à une fréquence d'horloge prédéfinie aussi longtemps que le résultat de la combinaison XOR est «true» (= vrai) et **que** la durée du signal XOR (8) est déterminée à partir du nombre de signaux de comptage.

**3.** Procédé selon la revendication 2, **caractérisé en ce que** le compteur du dispositif de comptage binaire (10) est démarré dès que le résultat de la combinaison XOR est «true».

**4.** Procédé selon la revendication 2 ou 3, **caractérisé en ce que** le dispositif de comptage binaire (10) fait partie d'un point de comptage (5), en particulier d'un point de comptage d'essieux.

**5.** Procédé selon l'une des revendications précédentes, **caractérisé en ce que** des capteurs d'un point de comptage d'essieux sont utilisés comme dispositifs de détection (3a, 3b).

**6.** Procédé selon l'une des revendications précédentes, **caractérisé en ce que** la distance entre le premier et le deuxième dispositif de détection (3a, 3b) est choisie assez petite pour que les impulsions de détection (7a, 7b) se recouvrent dans le temps.

**7.** Procédé selon l'une des revendications précédentes, **caractérisé en ce que** la distance entre les deux dispositifs de détection (3a, 3b) est $\leq$ 148 mm, de préférence $\leq$ 140 mm.

**8.** Procédé selon l'une des revendications précédentes, **caractérisé en ce que** des première et deuxième impulsions de détection numériques (7a, 7b) sont générées pour différents points de référence (2) du même véhicule et **que**, pour déterminer la vitesse moyenne du véhicule, on additionne la durée des signaux XOR (8) pour tous les points de référence (2) et que la différence de temps entre les deux impulsions de détection numériques (7a, 7b) est déterminée en divisant par deux la durée de la valeur moyenne des signaux XOR (8).

**9.** Utilisation d'un point de comptage d'essieux pour déterminer la vitesse d'un véhicule roulant sur rails au moyen d'un procédé selon l'une des revendications précédentes.

Fig. 1

Fig. 2

A_M

Fig. 3a

B_M

D

Fig. 3b

A

A/2

Fig. 3c

OL

B

B/2

Fig. 3d

A-OL    B-OL

Fig. 3e

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5395078 A